# EUROPEAN PATENT APPLICATION

(11) **EP 4 552 934 A1**
(43) Date of publication of application: **14.05.2025**
(21) Application number: 24184822.5
(22) Date of filing: 26.06.2024
(51) Int. Cl.: B60T 8/36, B60T 13/74, B60T 13/68, B60T 7/04

(54) **HYDRAULIC UNIT OF A BRAKE SYSTEM**

(30) Priority: 07.11.2023 KR 20230152664
(71) Applicant: HL Mando Corporation, Pyeongtaek-si, Gyeonggi-do 17962 (KR)
(72) Inventor: SONG, Mingeun, 35404 Seo-gu, Daejeon (KR)
(74) Representative: Pfenning, Meinig & Partner mbB

(57) **Abstract**

Disclosed herein is a hydraulic unit (1) of a brake system. The hydraulic unit (1) in accordance with the present embodiment may include a hydraulic block (100) including a cylinder bore provided with a master cylinder (500) connected to a brake pedal, a motor bore (111) provided with a motor (300) that generates hydraulic pressure by operating by an electrical signal output corresponding to displacement of the brake pedal, a hydraulic flow path, and a valve bore provided with a valve that controls a flow of a pressurized medium through the hydraulic flow path and an electronic control unit (200) configured to control operation of the motor (300) and the valve based on information on the displacement of the brake pedal, the motor bore (111) may be provided on a first surface (101) of the hydraulic block (100) and a housing (230) of the electronic control unit (200) may be provided on a second surface (102) of the hydraulic block (100) opposite to the first surface (101), the electronic control unit (200) may include a first circuit board and a second circuit board, a first connector (210) configured to supply electric power or transmit an electrical signal to the first circuit board may be positioned on an upper side of a third surface (103) forming an upper surface between the first surface (101) and the second surface (102), and a second connector (220) configured to supply electric power or transmit an electrical signal to the second circuit board may be positioned on a front side of a fourth surface (104) forming a front surface between the first surface (101) and the second surface (102).

## Description

### CROSS-REFERENCE TO RELATED APPLICATION

This application claims the benefit of Korean Patent Application No. 10-2023-0152664, filed on November 7, 2023 in the Korean Intellectual Property Office, the disclosure of which is incorporated herein by reference.

### BACKGROUND

### 1. Field

Embodiments of the present disclosure relate to a hydraulic unit of a brake system, and more particularly, to a hydraulic unit of a brake system for generating a braking force using an electrical signal in response to a displacement of a brake pedal.

### 2. Description of the Related Art

In vehicles, a brake system for braking is necessarily installed, and various types of brake systems have been suggested for the safety of drivers and passengers.

In brake systems in the related art, a method in which, when a driver presses a brake pedal, hydraulic pressure required for braking is supplied to a wheel cylinder using a mechanically connected booster is mainly used. However, as a market demand to implement various braking functions by responding in detail to a vehicle operating environment increases, electronic brake systems that receive a driver's willingness to brake as an electrical signal from a pedal displacement sensor for detecting a displacement of a brake pedal when the driver presses the brake pedal and operate a hydraulic pressure supply device based on the electrical signal so that hydraulic pressure required for braking is supplied to a wheel cylinder have recently been widely spread.

The electronic brake system generates and provides a brake pedal operation of a driver in a normal operating mode or a determination that braking should be performed during autonomous driving of a vehicle as an electrical signal, and the hydraulic pressure supply device is electrically operated and controlled based on the electrical signal, thereby forming hydraulic pressure required for braking and transmitting the hydraulic pressure to the wheel cylinder. As described above, the electronic brake system and the operating method thereof are electrically operated and controlled, and thus the electronic brake system and the operating method thereof may implement complex and various braking actions, but when a technical problem occurs in an electric component element, the hydraulic pressure required for braking is not stably generated, which may threaten the safety of occupants.

Accordingly, when one component element is broken or out of control, the electronic brake system enters an abnormal operating mode, and in this case, a mechanism in which a driver's brake pedal operation is directly linked to the wheel cylinder is required. That is, in the abnormal operating mode of the electronic brake system, it is required that, when the driver applies a pressing force to the brake pedal, the hydraulic pressure required for braking is immediately generated and transmitted directly to the wheel cylinder.

Meanwhile, in recent years, autonomous driving or highway driving assistance functions have been installed in vehicles to increase driver convenience. In order to perform the convenient functions, the brake system mounted on the vehicle has additional components for supplying and transmitting electrical signals, thereby increasing the size of a hydraulic block or the brake system. For this reason, in mounting the hydraulic block or the brake system on the vehicle, there are limitations in size and installation location, which soon leads to problems such as interference with surrounding components or impediment of the design freedom of the vehicle, and thus, a method of efficiently installing a brake system while maintaining the braking performance of a vehicle is required.

### SUMMARY

Therefore, it is an aspect of the present disclosure to provide a hydraulic unit of a brake system capable of easily implementing installation and disposition in a vehicle.

It is another aspect of the present disclosure to provide a hydraulic unit of a brake system capable of being provided in a compact size while performing various functions.

It is still another aspect of the present disclosure to provide a hydraulic unit of a brake system capable of improving the design freedom and space utilization of a vehicle.

It is yet another aspect of the present disclosure to provide a hydraulic unit of a brake system capable of achieving device durability and operational stability by preventing interference with surrounding components.

It is yet another aspect of the present disclosure to provide a hydraulic unit of a brake system capable of stably performing braking even in various operating situations.

It is yet another aspect of the present disclosure to provide a hydraulic unit of a brake system with improved performance and operational reliability.

Additional aspects of the disclosure will be set forth in part in the description which follows and, in part, will be obvious from the description, or may be learned by practice of the disclosure.

In accordance with one aspect of the present disclosure, a hydraulic unit includes a hydraulic block including a cylinder bore provided with a master cylinder connected to a brake pedal, a motor bore provided with a motor that generates hydraulic pressure by operating by an electrical signal output corresponding to displacement of the brake pedal, a hydraulic flow path, and a valve bore provided with a valve that controls a flow of a pressurized medium through the hydraulic flow path and an electronic control unit configured to control operation of the motor and the valve based on information on the displacement of the brake pedal, the motor bore is provided on a first surface of the hydraulic block and a housing of the electronic control unit is provided on a second surface of the hydraulic block opposite to the first surface, the electronic control unit includes a first circuit board and a second circuit board, a first connector configured to supply electric power or transmit an electrical signal to the first circuit board is positioned on an upper side of a third surface forming an upper surface between the first surface and the second surface on the housing, and a second connector configured to supply electric power or transmit an electrical signal to the second circuit board is positioned on a front side of a fourth surface forming a front surface between the first surface and the second surface on the housing.

The hydraulic unit may further include a reservoir in which the pressurized medium is accommodated, the hydraulic block may further include a reservoir bore communicating with the reservoir, and the reservoir bore may be provided in the fourth surface of the hydraulic block.

The second connector may be positioned between a front end of the reservoir and the fourth surface.
The first connector may be positioned between an upper end of the reservoir and the third surface.

The second connector may be disposed so that a power supply unit or a signal transmitting unit enters and engages in a direction corresponding to a thickness direction between the first surface and the second surface.

The first connector may be disposed so that a power supply unit or a signal transmitting unit enters and engages in a direction corresponding to a thickness direction between the first surface and the second surface.

The reservoir may include a plurality of chambers partitioned by a plurality of partition walls, and a plurality of reservoir bores may be provided to correspondingly communicate with the plurality of chambers.

The plurality of reservoir bores may be arranged in a direction corresponding to a thickness direction of the fourth surface.

The hydraulic block may further include a rising portion formed to protrude on the first surface so that a thickness of the fourth surface is greater than a thickness between the first surface and the second surface.

The reservoir may be disposed relatively higher than the second connector on the hydraulic block.

The front end of the housing may be positioned between the front end of the reservoir and the fourth surface.

The upper end of the housing may be positioned between the upper end of the reservoir and the third surface.

The cylinder bore may be provided in a fifth surface that forms a rear surface between the first surface and the second surface of the hydraulic block and is a surface opposite to the fourth surface.

The cylinder bore may be formed to extend along a front-rear direction.

The valve bore may be provided on the second surface of the hydraulic block.

The hydraulic block may further include a plurality of wheel ports to which a plurality of wheel cylinders are connected, respectively, and the wheel ports may be provided on the first surface of the hydraulic block.

The reservoir may include a fastener formed to protrude and extend to couple the reservoir and the hydraulic block, and the fastener may be fastened to at least one of the third surface and the fourth surface of the hydraulic block.

The second connector may be formed to have a long width and a short width, and the long width of the second connector may be disposed in an up-down direction on the housing.

The first connector may be formed to have a long width and a short width, and the long width of the first connector may be disposed in a front-rear direction on the housing.

In accordance with another aspect of the present disclosure, a hydraulic unit includes a hydraulic block including a cylinder bore provided with a master cylinder connected to a brake pedal, a motor bore provided with a motor that generates hydraulic pressure by operating by an electrical signal output corresponding to displacement of the brake pedal, a hydraulic flow path, and a valve bore provided with a valve that controls a flow of a pressurized medium through the hydraulic flow path and an electronic control unit configured to control operation of the motor and the valve based on information on the displacement of the brake pedal, an electronic control unit configured to control operation of the motor and a valve provided in the hydraulic block based on information on the displacement of the brake pedal, and a reservoir in which the pressurized medium is accommodated, the electronic control unit includes a first circuit board and a second circuit board, a first connector configured to supply electric power or transmit an electrical signal to the first circuit board is positioned on an upper side of the hydraulic block on a housing the electronic control unit, a second connector configured to supply electric power or transmit an electrical signal to the second circuit board is positioned on a front side of the hydraulic block on the housing, and the second connector is positioned between a front end of the reservoir and a front surface of the hydraulic block.

The reservoir may be disposed relatively higher than the second connector on the hydraulic block.

The second connector may be formed to have a long width and a short width, and the long width of the second connector may be disposed in an up-down direction on the housing.

A brake system including any one of the hydraulic units may be provided.

### BRIEF DESCRIPTION OF THE DRAWINGS

These and/or other aspects of the disclosure will become apparent and more readily appreciated from the following description of the embodiments, taken in conjunction with the accompanying drawings of which:
FIG. 1 is a perspective view showing a hydraulic unit in accordance with the present embodiment;
FIG. 2 is a side view showing the hydraulic unit in accordance with the present embodiment;
FIG. 3 is a plan view showing the hydraulic unit in accordance with the present embodiment;
FIG. 4 is a side view (front side view) showing the hydraulic unit in accordance with the present embodiment in another direction; and
FIG. 5 is a perspective view showing a hydraulic block in accordance with the present embodiment.

### DETAILED DESCRIPTION

Hereinafter, exemplary embodiments of the present invention will be described in detail with reference to the accompanying drawings. The following embodiments are provided to completely convey the spirit of the present invention to those skilled in the art to which the present invention pertains. The present invention is not limited to the embodiments shown herein and may be embodied in other forms. In the drawings, parts that bear no relation to descriptions may be omitted in order to clarify the present invention, and elements may be exaggerated in sizes thereof for ease of understanding.

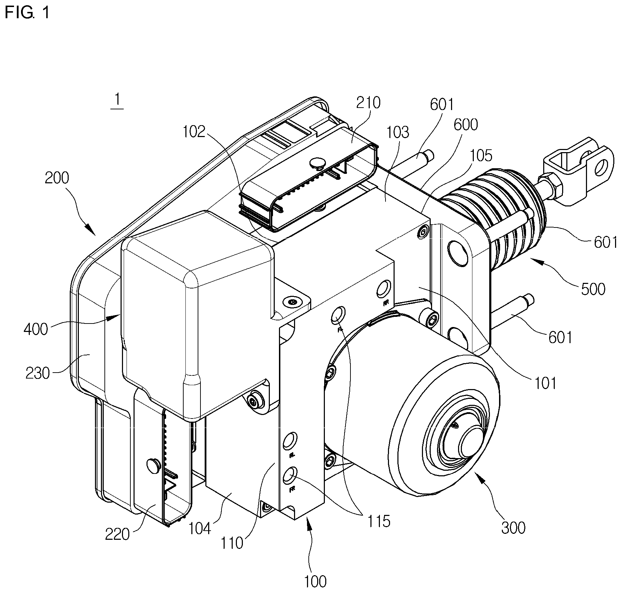

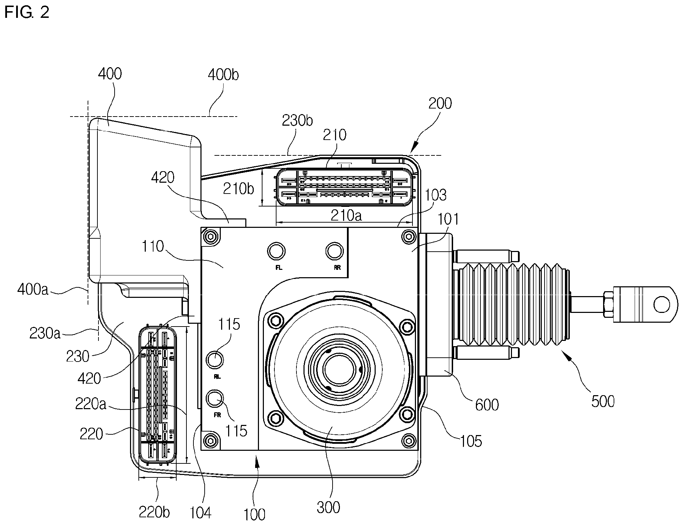

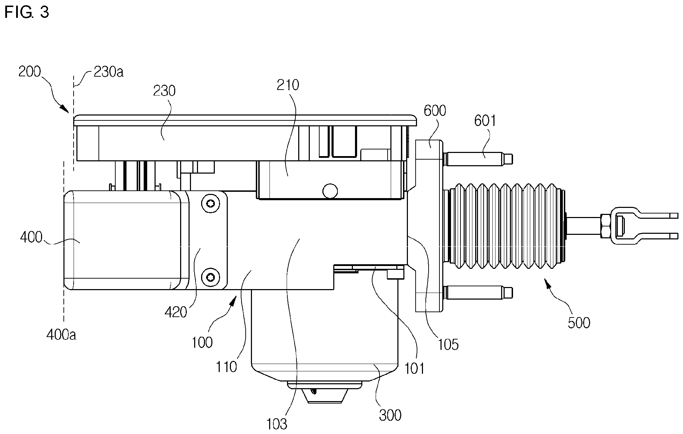

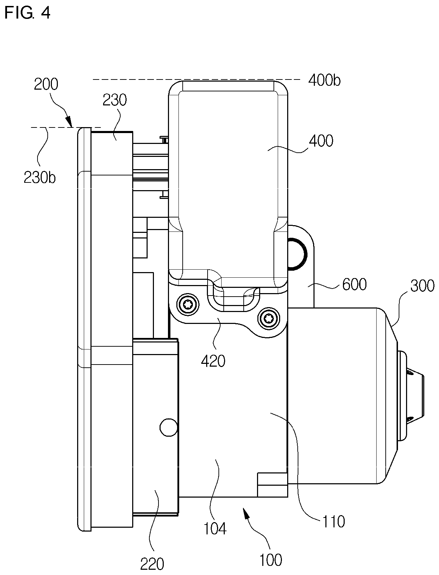

FIGS. 1 and 2 are a perspective view and a side view, respectively, showing a hydraulic unit 1 in accordance with the present embodiment. FIG. 3 is a plan view showing the hydraulic unit 1 in accordance with the present embodiment, and FIG. 4 is a side view (front side view) showing the hydraulic unit 1 in accordance with the present embodiment in another direction.

Referring to FIGS. 1 to 4, the hydraulic unit 1 in accordance with the present embodiment may be provided to include a master cylinder 500 connected to a brake pedal (not shown), a hydraulic block 100 having a plurality of hydraulic flow paths (not shown) and a plurality of bores, an electronic control unit 200 that controls the operation of the motor 300 and valves mounted on the hydraulic block 100, and a reservoir 400 in which a pressurized medium is accommodated.

The hydraulic block 100 may be provided in a hexahedral shape, inside which a plurality of hydraulic flow paths forming a movement path of the pressurized medium are provided, and outside which a plurality of bores into which various components such as the master cylinder 500, the motor 300, and the like are mounted are provided. Specifically, a hydraulic block 100 includes a cylinder bore provided with the master cylinder 500 that is connected to the brake pedal and operates according to the operation of the brake pedal, a motor bore 111 provided with the motor 300 that operates by an electrical signal output corresponding to the displacement of the brake pedal to form hydraulic pressure of a pressurized medium required for braking, a valve bore provided with a plurality of valves that control a flow of the pressurized medium through the hydraulic flow paths, a reservoir bore 112 communicating with the reservoir 400 in which the pressurized medium is accommodated, and wheel ports 115 each connected to a plurality of wheel cylinders.

"Upper," "lower," "front," and "rear" described below refer to upper, lower, left, and lower sides based on FIG. 2, respectively, and a thickness direction and a length direction refer to an up-down direction and a left-right direction based on FIG. 3. The terms are intended to aid understanding of the present disclosure, and should not be limited to specific directions or parts, but should be understood as relative concepts for clearly establishing positions and directions.

The motor bore 111 may be provided on a first surface 101 with a relatively large area on the hydraulic block 100, and a housing 230 of the electronic control unit 200 may be provided on a second surface 102 that has a relatively large area and is a surface opposite to the first surface 101. The valve bore in which the plurality of valves are provided may also be provided on the second surface 102 to be electrically connected to the electronic control unit 200 mounted on the second surface 102.

The motor bore 111 and the valve bore may be formed to be recessed and extended in the hydraulic block 100 in a direction parallel to the thickness direction between the first surface 101 and the second surface 102. A hydraulic piston (not shown) operated by the motor 300 may be inserted into the motor bore 111 to move back and forth, and various solenoid valves and check valves for controlling the flow of the pressurized medium transported along the hydraulic flow path may also be inserted and installed into the valve bore formed to be recessed in the second surface 102 in the same axial direction as the motor bore 111.

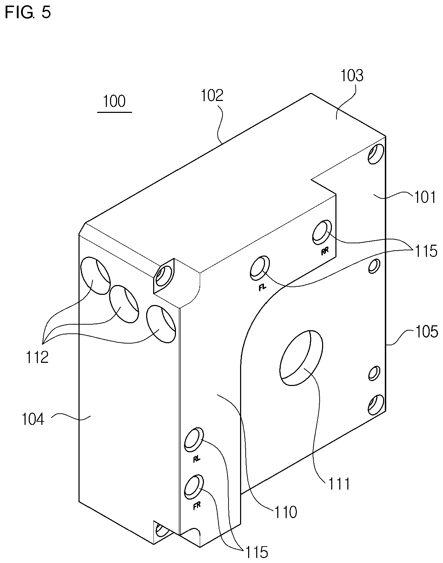

A rising portion 110 for increasing the thickness of the fourth surface 104, which is the front surface of the hydraulic block 100, may be formed to rise and protrude on the first surface 101 so that a plurality of reservoir bores 112 are stably arranged on the fourth surface 104 to be described below. A detailed description thereof will be provided below with reference to FIG. 5.

FIG. 5 is a perspective view showing the hydraulic block 100 in accordance with the present embodiment, and referring to FIGS. 1 to 5, the reservoir bore 112 may be formed in the fourth surface 104 forming the front surface between the first surface 101 and the second surface 102 of the hydraulic block 100.

The reservoir 400 may accommodate the pressurized medium therein, but may extend in the up-down direction to minimize the space occupied by the hydraulic unit 1. A chamber accommodating the pressurized medium inside the reservoir 400 may be connected to the master cylinder 500 or the hydraulic piston (not shown) through the reservoir bore 112 formed in the hydraulic block 100. The reservoir bore 112 may be formed in the fourth surface 104 forming the front surface between the first surface 101 and the second surface 102 of the hydraulic block 100. When the reservoir bore 112 is provided in the upper surface of the hydraulic block 100, since the reservoir 400 is disposed on the upper side of the hydraulic block 100, the size of the product in the up-down direction may be expanded. Accordingly, the hydraulic block 100 in accordance with the present embodiment may provide the reservoir bore 112 communicating with the reservoir 400 in the fourth surface 104, which is the front surface, rather than the upper surface, thereby suppressing expansion of the size and volume of the hydraulic unit 1 in the up-down direction.

The interior of the reservoir 400 may be partitioned into a plurality of chambers by partition walls. As one example, a chamber of the reservoir 400 may include a first chamber and a second chamber respectively connected to a plurality of master chambers provided in the master cylinder 500, and a third chamber connected to a pressure chamber in which the hydraulic piston operates. In this case, a plurality of reservoir bores 112 may be provided to ensure a smooth flow of the pressurized medium between the first to third chambers of the reservoir 400 and the master and pressure chambers provided in the hydraulic block 100. Specifically, the reservoir bores 112 may include a first reservoir bore 112 communicating with the first chamber, a second reservoir bore 112 communicating with the second chamber, and a third reservoir bore 112 communicating with the third chamber so that the respective chambers into which the reservoir 400 is partitioned communicate with the hydraulic block 100.

In this case, as the diameter of the reservoir bores 112 increases, a smoother flow of the pressurized medium may be implemented, but, since as the diameter of the reservoir bores 112 increases, the thickness of the hydraulic block 100 also increases, the size of the hydraulic unit 1 increases, thereby causing interference with surrounding components, so that there is a risk that vehicle applicability and space utilization of the vehicle body are reduced. Conversely, when the diameter of the reservoir bores 112 is reduced to suppress the increase in size of the hydraulic unit 1, the flow of the pressurized medium may not be smooth, and when the reservoir bores 112 are arranged in the up-down or longitudinal direction in the hydraulic block 100, the arrangement affects the disposition of other components such as the electronic control unit 200 and the like, which is a disadvantage in that the overall size and volume of the hydraulic unit 1 increase.

Accordingly, the hydraulic block 100 in accordance with the present embodiment includes the rising portion 110 to suppress the expansion of the size of the hydraulic unit 1 and minimize the effect on the disposition of surrounding components such as the electronic control unit 200 while enlarging the diameter of the reservoir bores 112 to a level that may provide a smooth flow of the pressurized medium.

A portion of the first surface 101 of the hydraulic block 100 may rise and protrude to form the rising portion 110, thereby expanding the thickness or area of the fourth surface 104. Specifically, the rising portion 110 may be provided integrally with the hydraulic block 100 and a portion of a front part of the first surface 101 may rise and protrude to expand the thickness or area of the fourth surface 104. Since only some part of the first surface 101 in contact with the fourth surface 104, excluding the part thereof where the motor 300 is mounted, protrudes to form the rising portion 110, expansion of the thickness or area of the fourth surface 104 is promoted while the increase in the weight of the hydraulic block 100 is suppressed, so that a plurality of reservoir bores 112 may be arranged in a direction corresponding to a thickness direction of the hydraulic block 100. Referring to FIG. 5, in the plurality of reservoir bores 112, the height of an upper end or lower end of any one reservoir bore 112 (a length from the bottom of the hydraulic block to the upper end or the lower end of the reservoir bore) may be positioned between an upper end and a lower end of another reservoir bore 112 (a section between a height from the bottom of the hydraulic block to the upper end of the other reservoir bore and a height from the bottom of the hydraulic block to the lower end of the other reservoir bore), thereby suppressing the increase in the length of the hydraulic block 100 in the up-down direction and thus achieving miniaturization of the product. Meanwhile, a plurality of wheel ports 115, through which the hydraulic flow paths of the hydraulic block 100 are connected to the plurality of wheel cylinders, respectively, may be provided on the first surface 101 or a surface parallel to the first surface 101 on the rising portion 110.

Since the plurality of reservoir bores 112 are disposed relatively higher than the second connector 220 of the electronic control unit 200, which will be described below, miniaturization of the size and volume of the product may be further achieved, and a detailed description thereof will be described below.

The reservoir 400 may include at least one fastener 420 formed to protrude and extend to be stably coupled to the hydraulic block 100, and the fastener 420 may be fastened to at least one of a third surface 103 of the hydraulic block 100 forming an upper surface between the first surface 101 and the second surface 102 or the fourth surface 104 by a fastening member such as a bolt.

The electronic control unit 200 is provided to control the operation of the motor 300 and the valves based on information on displacement of the brake pedal or information detected by various sensors (not shown).

Meanwhile, in recent years, in order for the brake system to perform stable braking of the vehicle even in inoperable situations such as failure of the electronic control unit or the like, a redundancy structure in which two circuit boards are disposed in the electronic control unit and a separate connector is provided on each circuit board has been developed. The electronic control unit having the redundancy structure may improve the reliability of braking operation because even when one circuit board fails, the other circuit board is able to normally control the operation of the brake system, but since not only a plurality of circuit boards have to be provided, but also a plurality of connectors connected to the respective circuit boards have to be provided, there is a problem in that the size and volume of the hydraulic unit rapidly increase. In this case, since there is a high risk of interference with surrounding component elements, the durability and operational stability of the components may be reduced, and furthermore, since the displacement and application of the hydraulic block or the brake system on the vehicle body is difficult, there is a problem that the design freedom and space utilization of the vehicle are reduced.

Accordingly, in order to suppress the expansion of the size and volume of the hydraulic unit 1, in the electronic control unit 200 in accordance with the present embodiment, a plurality of connectors 210 and 220 may be positioned in the space between an outer surface of the hydraulic block 100 and outer ends 400a and 400b of the reservoir 400, and at the same time, the plurality of connectors 210 and 220 may be disposed adjacent to different surfaces of the hydraulic block 100.

The electronic control unit 200 may include a first circuit board (not shown) that is connectable to the valve mounted in the valve bore by being provided on the second surface 102 of the hydraulic block 100 that is a surface opposite to the first surface 101 on which the motor 300 is disposed and receives electric power from a first power supply unit (not shown) or receives electrical signals through a first signal transmitting unit (not shown), and a second circuit board (not shown) that receives electric power from a second power supply unit (not shown) or receives electrical signals through a second signal transmitting unit (not shown). In addition, the electronic control unit 200 may include a first connector 210 that supplies electric power or transmits electrical signals to the first circuit board, a second connector 220 that supplies electric power or transmits electrical signals to the second circuit board, and the housing 230 that accommodates the first circuit board and the second circuit board therein and has the first connector 210 and the second connector 220 on the outer surface.

The first power supply unit and the second power supply unit may supply electric power to the first circuit board and the second circuit board from a vehicle battery (not shown) or the like, and the first power supply unit and the second power supply unit may independently supply and transmit electric power. That is, even when the first power supply unit fails or becomes inoperable, the second power supply unit may normally operate and supply electric power to the second circuit board through the second connector 220. Likewise, the first signal transmitting unit and the second signal transmitting unit may transmit electrical signals independently of each other. Accordingly, even when a failure or operational error of the first signal transmitting unit occurs, the second signal transmitting unit may normally operate and transmit electrical signals to the second circuit board through the second connector 220.

Since the first circuit board and the second circuit board are independently supplied with electric power from the first power supply unit and the second power supply unit, respectively, and independently transmit electrical signals through the first signal transmitting unit and the second signal transmitting unit, respectively, the first circuit board and the second circuit board are provided to independently control the operation of the motor 300 and the valves. That is, the first circuit board may be provided to control the operation of the motor 300 and the valves in a normal operating state, and the second circuit board may be provided to intervene and control the operation of the motor 300 and the valves when the first circuit board is inoperable due to failure or the like. In this way, the redundancy structure may be achieved by having any one circuit board stably control the brake system in an emergency situation such as the inoperability of the other circuit board.

The first connector 210 may be positioned on the upper side of the third surface 103 forming the upper surface between the first surface 101 and the second surface 102 of the hydraulic block 100 on the housing 230. At the same time, the first connector 210 may be disposed at a position between an upper end 400b of the reservoir 400 fastened to and mounted on the hydraulic block 100 and the third surface 103 of the hydraulic block 100. That is, the disposition position of the first connector 210 may be positioned in the space between the upper end 400b of the reservoir 400, which corresponds to the uppermost end of the hydraulic unit 1, and the third surface 103, which is the upper surface of the hydraulic block 100. In this case, when the first connector 210 is provided in a shape extending in one direction as shown in FIG. 2 and has a long width 210a and a short width 21 0b, the long width 210a of the first connector 210 may be disposed in the front-rear direction on the housing 230, thereby suppressing expansion of the size of the hydraulic unit 1 in the up-down direction. In addition, an upper end 230b of the housing 230 may be disposed at a position between the upper end 400b of the reservoir 400 and the third surface 103 of the hydraulic block 100. That is, a disposition height of the upper end 230b of the housing 230 may be positioned between the upper end 400b of the reservoir 400, which corresponds to the uppermost end of the hydraulic unit 1, and the third surface 103, which is the upper surface of the hydraulic block 100, thereby preventing the size of the hydraulic unit 1 in the up-down direction from expanding due to the housing 230 and the first connector 210 of the electronic control unit 200.

In addition, in order to prevent a wire and the like connected to the first connector 210 from interfering with surrounding components, the first connector 210 may be disposed to enter and engage in a direction corresponding to the thickness direction between the first surface 101 and the second surface 102 of the hydraulic block 100. In this way, since the wire connected to the first connector 210 may also be disposed between the upper end of the reservoir 400 and the third surface 103 of the hydraulic block 100, interference and contact between the wire and surrounding components may be minimized and expansion of the size of the hydraulic unit 1 in the up-down direction may be minimized.

The second connector 220 may be positioned on the front side of the fourth surface 104 forming the front surface between the first surface 101 and the second surface 102 of the hydraulic block 100 on the housing 230. At the same time, the second connector 220 may be disposed at a position between a front end 400a of the reservoir 400 fastened to and mounted on the hydraulic block 100 and the fourth surface 104 of the hydraulic block 100. That is, the disposition position of the second connector 220 may be positioned in the space between the front end 400a of the reservoir 400, which corresponds to the foremost end of the hydraulic unit 1, and the fourth surface 104, which is the front surface of the hydraulic block 100. In this case, when the second connector 220 is provided in a shape extending in one direction as shown in FIG. 2 and has a long width 220a and a short width 220b, the long width 220a of the second connector 220 may be disposed in the up-down direction on the housing 230, thereby suppressing expansion of the size of the hydraulic unit 1 in the front-rear direction. In addition, a front end 230a of the housing 230 may be disposed at a position between the front end 400a of the reservoir 400 and the fourth surface 104 of the hydraulic block 100. That is, a disposition position of the front end 230a of the housing 230 may be positioned between the front end 400a of the reservoir 400, which corresponds to the foremost end of the hydraulic unit 1, and the fourth surface 104, which is the front surface of the hydraulic block 100, thereby preventing the size of the hydraulic unit 1 in the front-rear direction from expanding due to the housing 230 and the second connector 220 of the electronic control unit 200.

In addition, in order to prevent a wire and the like connected to the second connector 220 from interfering with surrounding components, the second connector 220 may be disposed to enter and engage in a direction corresponding to the thickness direction between the first surface 101 and the second surface 102 of the hydraulic block 100. In this way, since the wire connected to the second connector 220 may also be disposed between the front end of the reservoir 400 and the fourth surface 104 of the hydraulic block 100, interference and contact between the wire and surrounding components may be minimized and expansion of the size of the hydraulic unit 1 in the front-rear direction may be minimized.

The second connector 220 may be disposed relatively lower than the reservoir 400. Since the reservoir 400 connected to and mounted on the reservoir bore 112 provided on the fourth surface 104 of the hydraulic block 100 is disposed relatively higher and the second connector 220 of the electronic control unit 200 is disposed relatively lower, the disposition of components provided in the hydraulic unit 1 may be more efficiently performed, and in this way, the hydraulic unit 1 may achieve a compact size and volume while performing various braking functions.

The cylinder bore may be provided with the master cylinder 500 connected to the brake pedal. The cylinder bore may be formed to be recessed and extend in a fifth surface 105 that forms a rear surface between the first surface 101 and the second surface 102 of the hydraulic block 100 and is a surface opposite to the fourth surface 104. The cylinder bore may be formed to extend along the front-rear direction on the hydraulic block 100, and an operating axis of the master cylinder 500 may also be provided in a direction parallel to the front-rear direction of the hydraulic block 100. As the axis of the master cylinder 500 is disposed in the direction parallel to the front-rear direction of the hydraulic block 100 and the axis of the motor 300 is disposed in the direction parallel to the thickness direction of the hydraulic block 100, the axis of the master cylinder 500 and the axis of the motor 300 may be perpendicular to each other, and in this way, the disposition of the master cylinder 500 and the motor 300 of the hydraulic unit 1 may be efficiently implemented. Meanwhile, reference numeral 600 denotes a mounting bracket for mounting the hydraulic block 100 on the vehicle body. The mounting bracket 600 is coupled to the fifth surface 105 of the hydraulic block 100 and is mounted on and fixed to the vehicle body through a plurality of bolts 601, so that the hydraulic block 100 may be stably fixed to and supported on the vehicle body via the mounting bracket.

In the hydraulic unit 1 in accordance with the present embodiment and the brake system including the same, as the electronic control unit 200 includes the first circuit board and the second circuit board, when one circuit board fails, the operation of the other circuit board may be implemented, thereby reliably braking the vehicle and giving trust to a driver, and at the same time, the disposition of the first connector 210 and the second connector 220 connected to the respective circuit boards may be efficiently implemented, thereby improving mountability of the vehicle. Furthermore, the hydraulic unit 1 in accordance with the present embodiment and the brake system including the same may achieve a compact size and volume while performing various functions, thereby increasing the design freedom and space utilization of the vehicle.

As is apparent from the above description, the hydraulic unit of the brake system in accordance with the present embodiment can easily implement installation and disposition in a vehicle.

The hydraulic unit of the brake system in accordance with the present embodiment can be provided in a compact size while performing various functions.
The hydraulic unit of the brake system in accordance with the present embodiment can improve the design freedom and space utilization of a vehicle.

The hydraulic unit of the brake system in accordance with the present embodiment can achieve device durability and operational stability by preventing interference with surrounding components.

The hydraulic unit of the brake system in accordance with the present embodiment can stably perform braking even in various operating situations.

The hydraulic unit of the brake system in accordance with the present embodiment can improve the product performance and operational reliability.

## Claims

1. A hydraulic unit (1) comprising:
a hydraulic block (100) including a cylinder bore provided with a master cylinder (500) connected to a brake pedal, a motor bore (111) provided with a motor (300) that generates hydraulic pressure by operating by an electrical signal output corresponding to displacement of the brake pedal, a hydraulic flow path, and a valve bore provided with a valve that controls a flow of a pressurized medium through the hydraulic flow path; and
an electronic control unit (200) configured to control operation of the motor (300) and the valve based on information on the displacement of the brake pedal,
wherein the motor bore (111) is provided on a first surface (101) of the hydraulic block (100) and a housing (230) of the electronic control unit (200) is provided on a second surface (102) of the hydraulic block (100) opposite to the first surface (101),
the electronic control unit (200) includes a first circuit board and a second circuit board,
a first connector (210) configured to supply electric power or transmit an electrical signal to the first circuit board is positioned on an upper side of a third surface (103) forming an upper surface between the first surface (101) and the second surface (102), and
a second connector (220) configured to supply electric power or transmit an electrical signal to the second circuit board is positioned on a front side of a fourth surface (104) forming a front surface between the first surface (101) and the second surface (102).

2. The hydraulic unit (1) according to claim 1, further comprising a reservoir (400) in which the pressurized medium is accommodated,
wherein the hydraulic block (100) further includes a reservoir bore (112) communicating with the reservoir (400), and
the reservoir bore (112) is provided in the fourth surface (104) of the hydraulic block (100).

3. The hydraulic unit (1) according to claim 2, wherein the second connector (220) is positioned between a front end of the reservoir (400) and the fourth surface (104).

4. The hydraulic unit (1) according to claim 2 or 3, wherein the first connector (210) is positioned between an upper end of the reservoir (400) and the third surface (103).

5. The hydraulic unit (1) according to any one of the preceding claims, at least one of the first connector (210) and the second connector (220) is disposed so that a power supply unit or a signal transmitting unit enters and engages in a direction corresponding to a thickness direction between the first surface (101) and the second surface (102).

6. The hydraulic unit (1) according to claim 2, a plurality of reservoir bores (112) are provided, wherein the plurality of reservoir bores (112) are arranged in a direction corresponding to a thickness direction of the fourth surface (104).

7. The hydraulic unit (1) according to claim 6, wherein the reservoir (400) is disposed relatively higher than the second connector (220) on the hydraulic block (100).

8. The hydraulic unit (1) according to claim 3, wherein a front end of the housing (230) is positioned behind the front end of the reservoir (400).

9. The hydraulic unit (1) according to claim 4, wherein an upper end of the housing (230) is positioned below the upper end of the reservoir (400).

10. The hydraulic unit (1) according to any one of preceding claims, wherein the cylinder bore is provided in a fifth surface (105) that forms a rear surface between the first surface (101) and the second surface (102) of the hydraulic block (100) and is a surface opposite to the fourth surface (104), and
the cylinder bore is formed to extend along a front-rear direction.

11. The hydraulic unit (1) according to any one of preceding claims, wherein the hydraulic block (100) further includes a plurality of wheel ports (115) to which a plurality of wheel cylinders are connected, respectively, and
the wheel ports (115) are provided on the first surface (101) of the hydraulic block (100).

12. A hydraulic unit (1) comprising:
a hydraulic block (100) including a cylinder bore provided with a master cylinder (500) connected to a brake pedal and a motor bore (111) provided with a motor (300) that generates hydraulic pressure by operating by an electrical signal output corresponding to displacement of the brake pedal;
an electronic control unit (200) configured to control operation of the motor (300) and a valve provided in the hydraulic block (100) based on information on the displacement of the brake pedal; and
a reservoir (400) in which a pressurized medium is accommodated,
wherein the electronic control unit (200) includes a first circuit board and a second circuit board,
a first connector (210) configured to supply electric power or transmit an electrical signal to the first circuit board is positioned on an upper side of the hydraulic block (100),
a second connector (220) configured to supply electric power or transmit an electrical signal to the second circuit board is positioned on a front side of the hydraulic block (100), and
the second connector (220) is positioned between a front end of the reservoir (400) and a front surface of the hydraulic block (100).

13. The hydraulic unit (1) according to claim 12, wherein the reservoir (400) is disposed relatively higher than the second connector (220) on the hydraulic block (100).

14. The hydraulic unit (1) according to claim 13, wherein the second connector (220) is formed to have a long width and a short width, and
the long width of the second connector (220) is disposed in an up-down direction on the housing (230).

15. The hydraulic unit (1) according to claim 13 or 14, wherein the first connector (210) is formed to have a long width and a short width, and
the long width of the first connector (210) is disposed in a front-rear direction on the housing (230).
